# EUROPEAN PATENT APPLICATION

(11) **EP 4 723 311 A1**
(43) Date of publication of application: **08.04.2026**
(21) Application number: 24881141.6
(22) Date of filing: 30.07.2024
(51) Int. Cl.: H01M 50/103, H01M 50/531, H01M 50/543, H01M 50/59

(54) **BATTERY CELL, BATTERY, AND ELECTRIC DEVICE**

(30) Priority: 25.10.2023 CN 202322873833 U
(71) Applicant: Contemporary Amperex Technology Co., Limited, Ningde, Fujian 352100 (CN)
(72) Inventor: LIN, Denghua, Ningde, Fujian 352100 (CN); CAO, Mengkai, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/108602
(87) International publication number: WO 2025/086770

(57) **Abstract**

Disclosed are a battery cell (20), a battery (100), and an electric device, where the battery cell (20) includes a housing (21), an electrode assembly (22), a first insulating member (23), and an electrode terminal (24); the electrode assembly (22) includes a tab (221); the housing (21) is configured to accommodate the electrode assembly (22); the housing (21) includes a wall portion; the first insulating member (23) is disposed between the wall portion and the electrode assembly (22); the electrode terminal (24) is disposed on the wall portion; and the electrode terminal (24) passes through the first insulating member (23) and directly connects with the tab (221).

## Description

The present application incorporates by reference in its entirety Chinese Patent Application No. 202322873833.6, filed on October 25, 2023, entitled "BATTERY CELL, BATTERY, AND ELECTRIC DEVICE".

### TECHNICAL FIELD

The present application relates to the field of battery technology, and more particularly, to a battery cell, a battery, and an electric device.

### BACKGROUND

Energy conservation and emission reduction are the keys to the sustainable development of the automotive industry, and electric vehicles have become an important part of the sustainable development of the automotive industry due to their advantages in energy conservation and environmental protection. For electric vehicles, battery technology is an important factor related to their development.

A battery includes a battery cell, and the battery cell includes electrode terminals and an electrode assembly, where the electrode terminals and the electrode assembly are usually electrically connected using an adapter to output electrical energy from the battery cell or input electrical energy into the battery cell. However, since the adapter not only occupies a relatively large internal space of the battery cell but also increases the weight of the battery cell, the energy density of the battery cell decreases, which is not conducive to improving the endurance performance of electric vehicles.

### SUMMARY

One of the purposes of the embodiments of the present application is to provide a battery cell, a battery, and an electric device, aiming to solve the technical problem of low energy density of battery cells in the related art.

To solve the above technical problem, the technical solution adopted in the embodiments of the present application is to provide a battery cell, including a housing, an electrode assembly, a first insulating member, and an electrode terminal, where the electrode assembly includes a tab, the housing is configured to accommodate the electrode assembly, the housing includes a wall portion, the first insulating member is disposed between the wall portion and the electrode assembly, the electrode terminal is disposed on the wall portion, and the electrode terminal passes through the first insulating member and directly connects with the tab.

The beneficial effects of the battery cell provided by the embodiments of the present application are that: the electrode terminal of the battery cell provided by the embodiments of the present application passes through the first insulating member and directly connects with the tab without additionally providing an adapter inside the housing, which not only saves the internal space of the housing but also reduces the weight of the battery cell, thereby effectively increasing the energy density of the battery cell and effectively improving the endurance performance of the electric device using the above battery cell.

In some embodiments of the present application, the electrode terminal includes a terminal body and a connecting portion connected to one end of the terminal body close to the electrode assembly, the terminal body is disposed on the wall portion, and the connecting portion passes through the first insulating member and directly connects with the tab.

By adopting the above technical solution, it is convenient to connect the electrode terminal and the tab.

In some embodiments of the present application, an outer peripheral contour of the connecting portion is a circular structure, and the tab is connected to the connecting portion along a circumferential direction of the connecting portion.

By adopting the above technical solution, the connection area between the tab and the connecting portion can be increased, thereby effectively improving the connection strength between the tab and the connecting portion, and the stress at the connection between the tab and the connecting portion in the circumferential direction of the connecting portion can be more uniform, thereby effectively reducing the risk of fracture at the connection between the tab and the connecting portion.

In some embodiments of the present application, the connecting portion is a circular ring structure.

By adopting the above technical solution, the connection strength between the tab and the connecting portion can be improved, and the weight of the electrode terminal can be reduced, thereby further increasing the energy density of the battery cell.

In some embodiments of the present application, the first insulating member includes an insulating body disposed between the wall portion and the electrode assembly; and one side of the connecting portion facing away from the terminal body is flush with one side of the insulating body facing away from the wall portion, or the surface of the connecting portion facing away from the terminal body protrudes from one side of the insulating body facing away from the wall portion.

By adopting the above technical solution, there is no need to squeeze the tab in order to pass the tab through the first insulating member, making it more convenient to directly connect the electrode terminal and the tab, while effectively reducing the risk of fracture of the tab.

In some embodiments of the present application, the battery cell further includes a sealing member, the sealing member is disposed between the wall portion and the electrode terminal and sleeves the connecting portion, the wall portion is provided with a first through hole, the first insulating member is provided with a second through hole, the connecting portion passes through the first through hole and the second through hole, and a minimum distance between an outer wall of the connecting portion and a hole wall of the first through hole and/or a hole wall of the second through hole and/or an inner wall of the sealing member is 0.1 mm to 7 mm.

By adopting the above technical solution, the risk of interference between the connecting portion and one or more of the wall portion, the first insulating member, and the sealing member during the assembly process is effectively reduced, and the connecting portion can have sufficient coverage area, thereby providing sufficient connection area between the connecting portion and the tab, effectively improving the connection strength between the connecting portion and the tab.

In some embodiments of the present application, the electrode terminal and the tab are welded to form a weld mark, and various parts of the weld mark do not overlap with each other.

By adopting the above technical solution, the consistency of the welding depth between the electrode terminal and the tab is effectively improved, thereby effectively alleviating the situation of stress concentration at the connection between the electrode terminal and the tab, and effectively improving the connection strength between the electrode terminal and the tab.

In some embodiments of the present application, the electrode terminal includes a first metal layer and a second metal layer of different materials, and the first metal layer is connected to one side of the second metal layer facing the electrode assembly and directly connects with the tab.

By adopting the above technical solution, the electrode terminal can be connected to two components of different materials, while effectively improving the connection strength between the electrode terminal and the two components of different materials.

In some embodiments of the present application, the first metal layer and the second metal layer are connected to form a connection interface, and at least part of the connection interface is a curved surface.

By adopting the above technical solution, the connection area between the first metal layer and the second metal layer is effectively increased, thereby effectively improving the connection strength between the first metal layer and the second metal layer, effectively reducing the risk of fracture of the electrode terminal, and facilitating the improvement of the performance of the battery cell.

In some embodiments of the present application, the connection interface includes a first connection surface and a second connection surface, a central axis of the electrode terminal passes through the first connection surface, the second connection surface is located on an outer peripheral side of the first connection surface, and the first connection surface is a curved surface.

By adopting the above technical solution, the central part of the connection interface is a curved surface, thereby providing sufficient connection area between the central part of the first metal layer and the central part of the second metal layer, further improving the connection strength between the first metal layer and the second metal layer, and further reducing the risk of fracture of the electrode terminal.

In some embodiments of the present application, a central axis of the first connection surface coincides with the central axis of the electrode terminal.

By adopting the above technical solution, the stress at the connection between the first metal layer and the second metal layer in the circumferential direction of the electrode terminal is more uniform, and the connection area between the central part of the first metal layer and the central part of the second metal layer can be further increased, thereby further improving the connection strength between the first metal layer and the second metal layer, and further reducing the risk of fracture of the electrode terminal.

In some embodiments of the present application, the second connection surface is a curved surface.

By adopting the above technical solution, the area of the connection interface can be further increased, thereby further improving the connection strength between the first metal layer and the second metal layer, and further reducing the risk of fracture of the electrode terminal.

In some embodiments of the present application, the central axis of the first connection surface, a central axis of the second connection surface, and the central axis of the electrode terminal coincide.

By adopting the above technical solution, the stress at the connection between the first metal layer and the second metal layer in the circumferential direction of the electrode terminal is more uniform, thereby further improving the connection strength between the first metal layer and the second metal layer, and further reducing the risk of fracture of the electrode terminal.

In some embodiments of the present application, a point of the connection interface closest to the electrode assembly is located on the central axis of the electrode terminal.

By adopting the above technical solution, the part of the connection interface with a larger area is concentrated on the central axis of the electrode terminal to increase the connection force at the part of the connection between the first metal layer and the second metal layer on the central axis of the electrode terminal, thereby further improving the connection strength between the first metal layer and the second metal layer, and further reducing the risk of fracture of the electrode terminal.

The embodiments of the present application also provide a battery, including the battery cell described in any of the above embodiments.

The beneficial effects of the battery provided by the embodiments of the present application are that: the battery provided by the embodiments of the present application effectively increases the energy density of the battery due to the use of the battery cell described in any of the above embodiments.

The embodiments of the present application also provide an electric device, including the above battery.

The beneficial effects of the electric device provided by the embodiments of the present application are that: the electric device provided by the embodiments of the present application effectively improves the endurance performance of the electric device due to the use of the above battery.

### BRIEF DESCRIPTION OF DRAWINGS

In order to more clearly illustrate the technical solutions in the embodiments of the present application, the drawings required for use in the embodiments or exemplary technical descriptions will be briefly introduced below. Obviously, the drawings described below are only some embodiments of the present application, and for those of ordinary skill in the art, other drawings can be obtained based on these drawings without creative effort.
FIG. 1 is a schematic structural diagram of a vehicle according to an embodiment of the present application;
FIG. 2 is a schematic exploded structural diagram of a battery according to an embodiment of the present application;
FIG. 3 is a schematic structural diagram of a battery cell according to an embodiment of the present application;
FIG. 4 is a schematic exploded structural diagram of the battery cell shown in FIG. 3;
FIG. 5 is a schematic structural front view of the battery cell shown in FIG. 3;
FIG. 6 is a schematic structural cross-sectional view of the battery cell shown in FIG. 5 along an A-A line direction;
FIG. 7 is an enlarged schematic structural diagram at B of the battery cell shown in FIG. 6; and
FIG. 8 is a schematic structural diagram of an electrode terminal according to an embodiment of the present application.

Description of reference signs of drawings:
1000. vehicle;
100. battery;
10. box; 11. first part; 12. second part;
20. battery cell; 21. housing; 211. shell; 212. end cover; 2121. first through hole; 22. electrode assembly; 221. tab; 23. first insulating member; 231. second through hole; 232. insulating body; 233. protective portion; 24. electrode terminal; 241. terminal body; 242. connecting portion; 243. first metal layer; 244. second metal layer; 245. connection interface; 25. sealing member; 26. fixing frame; 27. second insulating member; 28. weld mark; 29. pressure relief mechanism;
200. controller; and
300. motor.

### DESCRIPTION OF EMBODIMENTS

In order to make the purpose, technical solutions, and advantages of the present application clearer, the present application will be further described in detail below in conjunction with the drawings and embodiments. It should be understood that the specific embodiments described here are only used to explain the present application and are not used to limit the present application.

It should be noted that when a component is referred to as being "fixed to" or "disposed on" another component, it can be directly on the another component or indirectly on the another component. When a component is referred to as being "connected to" another component, it can be directly or indirectly connected to the another component. The orientation or positional relationships indicated by terms such as "upper", "lower", "left", "right" are based on the orientation or positional relationships shown in the drawings, and are only for convenience of description, rather than indicating or implying that the referred apparatus or element must have a specific orientation, be constructed and operated in a specific orientation, and therefore should not be construed as limiting the present application. For those of ordinary skill in the art, the specific meanings of the above terms can be understood according to specific situations. The terms "first" and "second" are only used for convenience of description and cannot be understood as indicating or implying relative importance or implicitly indicating the number of technical features. The meaning of "multiple" is two or more, unless otherwise clearly and specifically defined.

In the embodiments of the present application, the same reference signs indicate the same components, and for brevity, detailed descriptions of the same components are omitted in different embodiments. It should be understood that the thickness, length, width, and other dimensions of various components in the embodiments of the present application shown in the drawings are only for illustrative purposes and should not constitute any limitation to the present application.

As the smallest unit composing a battery, a battery cell usually includes a housing, an electrode assembly, a first insulating member, and an electrode terminal. The electrode assembly is placed inside the housing, and the first insulating member is disposed between the wall portion of the housing and the electrode assembly to insulate and separate the wall portion of the housing from the electrode assembly. The electrode terminal is disposed on the wall portion of the housing for outputting electrical energy from the battery cell or inputting electrical energy into the battery cell.

In the related art, a part of the electrode terminal extends into the internal environment of the battery cell and is connected to the tab of the electrode assembly through an adapter, and another part of the electrode terminal is exposed to the external environment of the battery cell and is connected to a busbar. However, since the adapter needs to be disposed in the internal environment of the battery cell and the adapter has a large volume, the adapter needs to occupy more internal space of the battery cell, resulting in a decrease in the volumetric energy density of the battery cell, and the adapter has a large weight, which also leads to an increase in the weight of the battery cell, thereby causing a decrease in the gravimetric energy density of the battery cell.

In order to increase the energy density of the battery cell, the electrode terminal of the battery cell provided by the embodiments of the present application passes through the first insulating member and directly connects with the tab without additionally providing an adapter inside the housing, which not only saves the internal space of the housing but also reduces the weight of the battery cell, thereby effectively increasing the energy density of the battery cell and effectively improving the endurance performance of the electric device using the above battery cell.

According to the battery cell, the battery, and the electric device using the battery as a power source disclosed in the embodiments of the present application, the electric device may be, but is not limited to, vehicles, mobile phones, portable devices, laptops, ships, spacecraft, electric toys, and electric tools. The vehicle may be a fuel vehicle, a gas vehicle, or a new energy vehicle, and the new energy vehicle may be a pure electric vehicle, a hybrid vehicle, or an extended-range vehicle. Spacecraft includes airplanes, rockets, space shuttles, spaceships, and the like. Electric toys include fixed or mobile electric toys, such as game consoles, electric car toys, electric ship toys, and electric airplane toys. Electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers.

For convenience of description, the following embodiments take an electric device of an embodiment of the present application as a vehicle as an example.

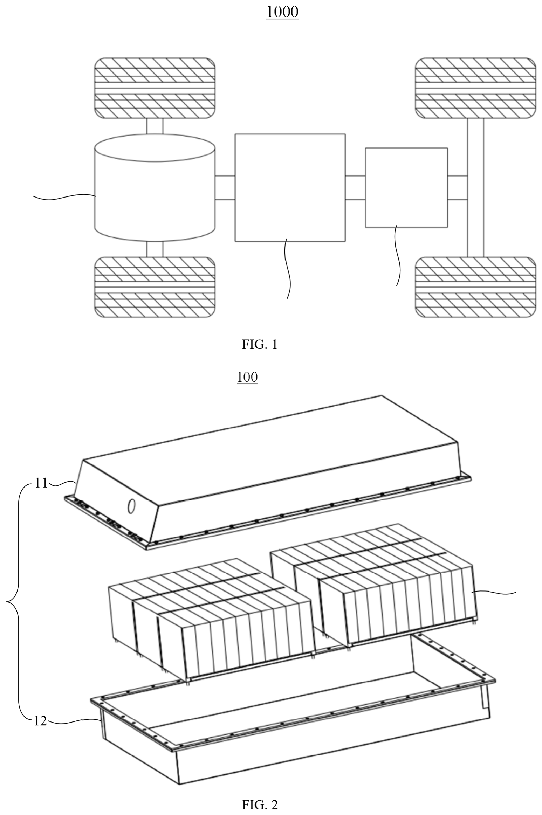

Referring to FIG. 1, FIG. 1 is a schematic structural diagram of a vehicle 1000 according to an embodiment of the present application. The vehicle 1000 may be a fuel vehicle, a gas vehicle, or a new energy vehicle, and the new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be used for powering the vehicle 1000. For example, the battery 100 may serve as an operating power source for the vehicle 1000. The vehicle 1000 may further include a controller 200 and a motor 300, where the controller 200 is used to control the battery 100 to supply power to the motor 300, for example, for the working power demand during starting, navigation, and driving of the vehicle 1000.

In some embodiments of the present application, the battery 100 can not only serve as an operating power source for the vehicle 1000 but also as a driving power source for the vehicle 1000, replacing or partially replacing fuel or natural gas to provide driving power for the vehicle 1000.

Referring to FIG. 2, FIG. 2 is a schematic exploded diagram of a battery 100 according to an embodiment of the present application. The battery 100 includes a box 10 and a battery cell 20, where the battery cell 20 is accommodated in the box 10. The box 10 is configured to provide an accommodation space for the battery cell 20, and the box 10 may adopt various structures. In some embodiments, the box 10 may include a first part 11 and a second part 12, where the first part 11 and the second part 12 cover each other, and the first part 11 and the second part 12 together define the accommodation space for accommodating the battery cell 20. The second part 12 may be a hollow structure with one end open, the first part 11 may be a plate-like structure, and the first part 11 covers the open side of the second part 12 so that the first part 11 and the second part 12 together define the accommodation space. The first part 11 and the second part 12 may alternatively both be hollow structures with one side open, and the open side of the first part 11 covers the open side of the second part 12. Certainly, the box 10 formed by the first part 11 and the second part 12 may be in various shapes, such as cylinder or cuboid.

In some embodiments, the box 10 may serve as part of the chassis structure of the vehicle 1000. For example, part of the box 10 may become at least part of the floor of the vehicle 1000, or part of the box 10 may become at least part of the cross beams and longitudinal beams of the vehicle 1000.

In the battery 100, there may be multiple battery cells 20, and the multiple battery cells 20 may be connected in series or in parallel or in a mixed connection, where mixed connection means that there are both series and parallel connections among the multiple battery cells 20. The multiple battery cells 20 may be directly connected in series or in parallel or in a mixed connection, and then the whole formed by the multiple battery cells 20 is accommodated in the box 10. Certainly, the battery 100 may also be that multiple battery cells 20 are first connected in series or in parallel or in a mixed connection to form a battery module, and then multiple battery modules are connected in series or in parallel or in a mixed connection to form a whole and accommodated in the box 10. The battery 100 may also include other functional components. For example, the battery 100 may also include a busbar for achieving electrical connection between the multiple battery cells 20.

Each battery cell 20 may be a secondary battery or a primary battery, where the secondary battery refers to a battery cell 20 that can be charged to activate the active material and continue to be used after the battery cell 20 is discharged, and the primary battery refers to a battery cell 20 that cannot be charged to activate the active material and continue to be used after the electrical energy of the battery cell 20 is exhausted. The battery cell 20 may alternatively be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, but is not limited thereto. The battery cell 20 may be a cylindrical battery cell, a prismatic battery cell, a pouch battery cell, or a battery cell 20 of other shapes, where the prismatic battery cell includes a square-shell battery cell, a blade-shaped battery cell, or a polygonal prismatic battery, and the polygonal prismatic battery is, for example, a hexagonal prismatic battery, and the present application has no particular limitation.

Certainly, in some embodiments, the battery 100 may not include the box 10, but multiple battery cells 20 are electrically connected and assembled into the electric device after forming a whole through necessary fixing structures.

To illustrate the technical solution provided by the present application, detailed description is given below in conjunction with specific drawings and embodiments.

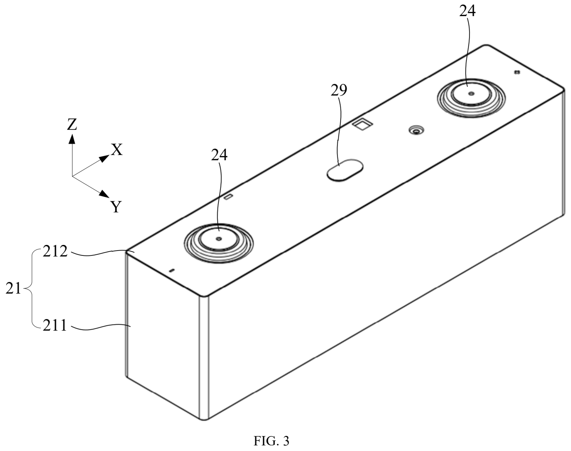

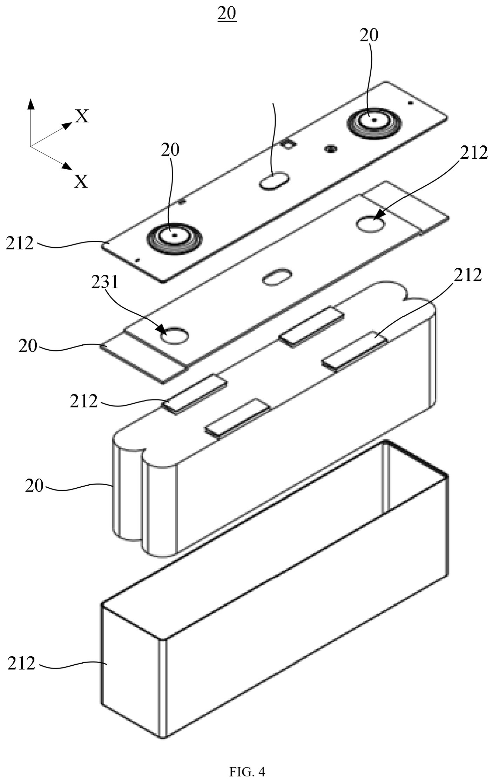

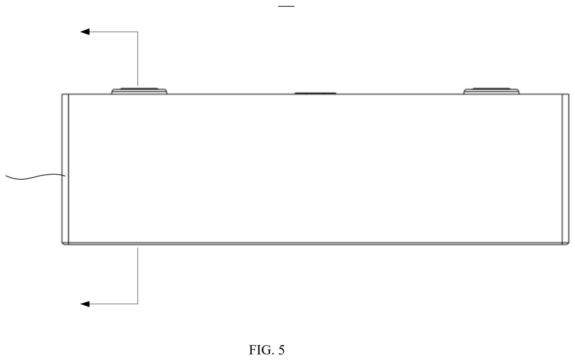

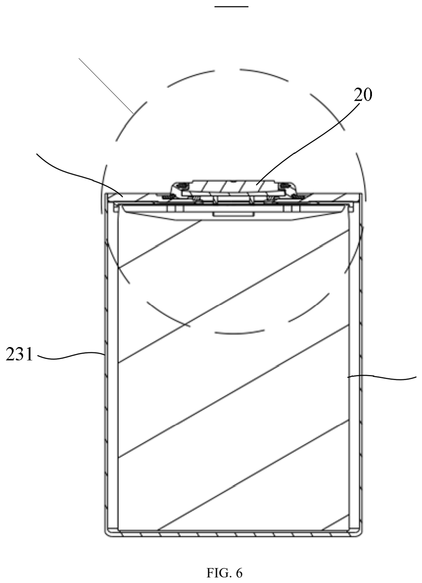

In a first aspect, referring to FIGs. 3 to 7, an embodiment of the present application provides a battery cell 20, including a housing 21, an electrode assembly 22, a first insulating member 23, and an electrode terminal 24, where the electrode assembly 22 includes a tab 221, the housing 21 is configured to accommodate the electrode assembly 22, the housing 21 includes a wall portion, the first insulating member 23 is disposed between the wall portion and the electrode assembly 22, the electrode terminal 24 is disposed on the wall portion, and the electrode terminal 24 passes through the first insulating member 23 and directly connects with the tab 221.

The housing 21 includes a shell 211 and an end cover 212, where the shell 211 is a component configured to provide the internal environment of the battery cell 20, and the internal environment may be used for accommodating components such as the electrode assembly 22 and the first insulating member 23. The shell 211 may be an independent component, an opening may be provided on the shell 211, and the end cover 212 covers the opening to form the internal environment of the battery cell 20, with components such as the electrode assembly 22 and the first insulating member 23 accommodated in the internal environment. Specifically, the shell 211 and the end cover 212 may form a common connection surface before other components enter the shell, and when the interior of the shell 211 needs to be sealed, the end cover 212 covers the opening of the shell 211. Optionally, the shape of the shell 211 may be, but is not limited to, cuboid, cylindrical, and hexagonal prism. Specifically, the shape of the shell 211 may be determined based on the specific shape and size of the electrode assembly 22. The material of the shell 211 may be, but is not limited to, copper, iron, aluminum, stainless steel, and aluminum alloy.

The end cover 212 refers to a component that covers the opening of the shell 211 to isolate the internal environment of the battery cell 20 from the external environment. The shape of the end cover 212 may adapt to the shape of the shell 211 to fit the shell 211. In some embodiments, the end cover 212 may be made of a material with certain hardness and strength, so that the end cover 212 is not easily deformed when subjected to extrusion and collision, enabling the battery cell 20 to have higher structural strength and improved safety performance. For example, the end cover 212 may be made of materials such as copper, iron, aluminum, stainless steel, aluminum alloy, or plastic. In some embodiments, the end cover 212 may also be provided with a pressure relief mechanism 29 for releasing internal pressure when the internal pressure or temperature of the battery cell 20 reaches a threshold.

The wall portion of the housing 21 may be any wall of the shell 211, such as the side wall of the shell 211 or the bottom wall of the shell 211, or it may be the end cover 212.

The electrode assembly 22 is a component in the battery cell 20 where electrochemical reactions occur. The battery cell 20 may contain one or more electrode assemblies 22. The electrode assembly 22 is mainly made by winding or stacking a positive electrode sheet, a negative electrode sheet, and a separator using a winding process or a stacking process. Multiple positive electrode sheets and multiple negative electrode sheets may be provided separately, with the multiple positive electrode sheets and multiple negative electrode sheets alternately stacked. In some embodiments, multiple positive electrode sheets may be provided, and the negative electrode sheet is folded to form multiple stacked folding segments, with one positive electrode sheet clamped between adjacent folding segments. In some other embodiments, both the positive electrode sheet and the negative electrode sheet are folded to form multiple stacked folding segments. In some embodiments, multiple separators may be provided, respectively disposed between any adjacent positive electrode sheet or negative electrode sheet. In some other embodiments, the separator may be continuously provided, disposed between any adjacent positive electrode sheet or negative electrode sheet by folding or winding. The shape of the electrode assembly 22 may be, but is not limited to, cylindrical, flat, and polygonal prism. In some embodiments, the electrode assembly 22 also includes a tab 221, and the tab 221 can lead current out from the electrode assembly 22. The tab 221 includes a positive tab and a negative tab, where the positive tab is connected to the positive electrode sheet, and the negative tab is connected to the negative electrode sheet.

During the charging and discharging process of the battery cell 20, active ions (such as lithium ions) intercalate and deintercalate back and forth between the positive electrode sheet and the negative electrode sheet. The separator is disposed between the positive electrode sheet and the negative electrode sheet, which can prevent short circuits between the positive and negative electrodes while allowing active ions to pass through.

The positive electrode sheet may include a positive electrode current collector and a positive electrode active material disposed on at least one surface of the positive electrode current collector. In some embodiments, the positive electrode current collector has two surfaces opposite in its own thickness direction, and the positive electrode active material is disposed on either or both of the two opposite surfaces of the positive electrode current collector.

As an example, a metal foil, a composite current collector, or a foam metal may serve as the positive electrode current collector. For example, as a metal foil, silver surface-treated aluminum or stainless steel, stainless steel, copper, aluminum, nickel, carbon electrode, carbon, nickel, or titanium may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene). The foam metal may be foam nickel, foam copper, foam aluminum, foam alloy, foam carbon, or the like. When the foam metal serves as the positive electrode, the surface of the foam metal may not be provided with a positive electrode active material, or certainly, a positive electrode active material may also be provided. As an example, lithium source material, potassium metal, or sodium metal may also be filled or/and deposited in the foam metal, where the lithium source material is lithium metal and/or lithium-rich material.

As an example, the positive electrode active material may include at least one of the following materials: lithium-containing phosphate, lithium transition metal oxide, and their respective modified compounds. However, the present application is not limited to these materials, and other conventional materials may be used as positive electrode active materials for the battery cell 20. These positive electrode active materials may be used alone or in combination of two or more. Examples of lithium-containing phosphate may include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of lithium transition metal oxide may include, but are not limited to, at least one of lithium cobalt oxide (such as LiCoO₂), lithium nickel oxide (such as LiNiO₂), lithium manganese oxide (such as LiMnO₂, LiMn₂O₂), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (such as LiNi_{0.85}Co_{0.1}Al_{0.05}O₂) and their modified compounds.

The negative electrode sheet may include a negative electrode current collector and a negative electrode active material disposed on at least one surface of the negative electrode current collector. In some embodiments, the negative electrode current collector has two surfaces opposite in its own thickness direction, and the negative electrode active material is disposed on either or both of the two opposite surfaces of the negative electrode current collector.

As an example, a metal foil, a composite current collector, or a foam metal may be used as the negative electrode current collector. For example, as a metal foil, silver surface-treated aluminum or stainless steel, stainless steel, copper, aluminum, nickel, carbon electrode, carbon, nickel, or titanium may be used. The composite current collector may include a polymer material substrate and a metal layer. The composite current collector may be formed by forming a metal material (copper, copper alloy, nickel, nickel alloy, titanium, titanium alloy, silver and silver alloy, or the like) on a polymer material substrate (such as a substrate of polypropylene, polyethylene terephthalate, polybutylene terephthalate, polystyrene, or polyethylene). The foam metal may be foam nickel, foam copper, foam aluminum, foam alloy, foam carbon, or the like.

As an example, the negative electrode active material may be a negative electrode active material known in the art for the battery cell 20. As an example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon oxide compound, silicon-carbon composite, silicon-nitrogen composite, silicon alloy, and the like. The tin-based material may be selected from at least one of elemental tin, tin oxide compound, and tin alloy. However, the present application is not limited to these materials, and other conventional materials may be used as negative electrode active materials for the battery cell 20. These negative electrode active materials may be used alone or in combination of two or more.

In some embodiments, the material of the positive electrode current collector may be aluminum, and the material of the negative electrode current collector may be copper.

In some embodiments, the separator is a separating film. The present application has no particular limitation on the type of the separating film, and any known porous structure separating film with good chemical stability and mechanical stability may be selected. For example, the main material of the separating film may be selected from at least one of glass fiber, non-woven fabric, polyethylene, polypropylene, polyvinylidene fluoride, and ceramic. The separating film may be a single-layer film or a multi-layer composite film. When the separating film is a multi-layer composite film, the materials of the layers may be the same or different. The separator may be a single component located between the positive electrode sheet and the negative electrode sheet, or it may be attached to the surface of the positive electrode sheet and the surface of the negative electrode sheet.

In some embodiments, the separator is a solid-state electrolyte. The solid-state electrolyte is disposed between the positive electrode sheet and the negative electrode sheet, simultaneously playing the role of ion conduction and isolation of positive and negative electrodes.

In some embodiments, the battery cell 20 also includes an electrolyte, and the electrolyte plays the role of conducting ions between the positive electrode sheet and the negative electrode sheet. The present application has no specific limitation on the type of the electrolyte, which can be selected according to needs. The electrolyte may be, but is not limited to, liquid electrolyte, gel electrolyte, and solid-state electrolyte.

The first insulating member 23 may be used to isolate the end cover 212 from the electrical connection portion 242 member disposed inside the shell 211. For example, the first insulating member 23 is used to isolate the end cover 212 from the electrode assembly 22 to reduce the risk of short circuit. Optionally, the material of the first insulating member 23 may be, but is not limited to, plastic and rubber. In some embodiments, the first insulating member 23 may be a plate-like structure, the first insulating member 23 is disposed substantially parallel to the end cover 212, the first insulating member 23 may be connected to the end cover 212, and the connection method between the first insulating member 23 and the end cover 212 includes, but is not limited to, bonding and riveting.

The electrode terminal 24 is a component electrically connected to the electrode assembly 22 for outputting electrical energy from the battery cell 20 or inputting electrical energy to the battery cell 20. In some embodiments, the electrode terminal 24 may be disposed on the end cover 212, a part of the electrode terminal 24 extends into the internal environment of the battery cell 20 and directly connects with the tab 221 of the electrode assembly 22, and another part of the electrode terminal 24 is exposed to the external environment of the battery cell 20 and is connected to components such as a busbar and a sampling device. In some embodiments, the electrode terminal 24 may be a columnar structure, such as a cylindrical structure or a prismatic structure. In some other embodiments, the electrode terminal 24 may also be a plate-like structure, such as a circular plate or a square plate. The electrode terminal 24 may be made of one metal material or multiple metal materials, and the metal material may be, but is not limited to, copper, aluminum, nickel, zinc, and iron. The electrode terminal 24 may be an integrally formed member or may be formed by multiple parts separately and then connected to each other.

The direct connection between the electrode terminal 24 and the tab 221 of the electrode assembly 22 means that there is no transfer component at the connection between the electrode terminal 24 and the tab 221 of the electrode assembly 22, but at least part of the electrode assembly 22 directly connects with at least part of the tab 221 of the electrode assembly 22. The connection method between the electrode terminal 24 and the tab 221 of the electrode assembly 22 may be, but is not limited to, welding, bonding, and riveting.

The electrode terminal 24 of the battery cell 20 provided by the embodiments of the present application passes through the first insulating member 23 and directly connects with the tab 221 without additionally providing an adapter inside the housing 21, which not only saves the internal space of the housing 21 but also reduces the weight of the battery cell 20, thereby effectively increasing the energy density of the battery cell 20 and effectively improving the endurance performance of the electric device using the above battery cell 20.

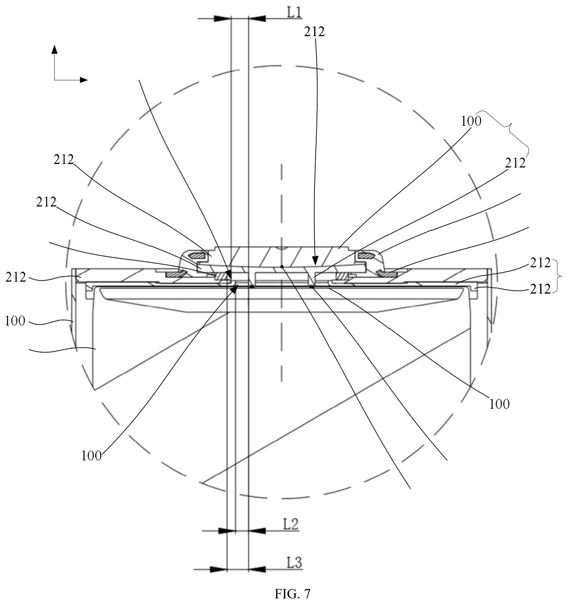

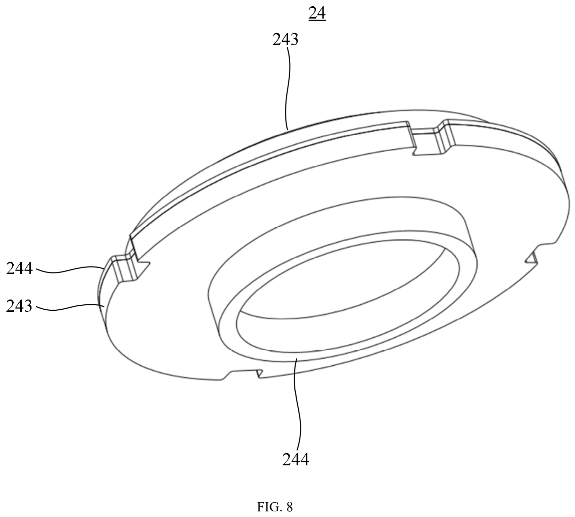

In some embodiments of the present application, referring to FIGs. 7 and 8, the electrode terminal 24 includes a terminal body 241 and a connecting portion 242 connected to one end of the terminal body 241 close to the electrode assembly 22, the terminal body 241 is disposed on the wall portion, and the connecting portion 242 passes through the first insulating member 23 and directly connects with the tab 221.

The terminal body 241 is the main body part of the electrode terminal 24. The terminal body 241 is disposed on the wall portion, the battery cell 20 may also include a fixing member, the fixing member is connected to the surface of the wall portion facing away from the electrode assembly 22, an accommodation space is formed inside the fixing member, and the terminal body 241 is accommodated in the accommodation space. In some embodiments, the fixing member includes a fixing frame 26 and a second insulating member 27, the fixing frame 26 includes a fixing seat and a connecting seat, the interior of the fixing seat constitutes the above accommodation space, and the terminal body 241 is accommodated in the accommodation space. Understandably, at least part of the terminal body 241 protrudes toward the external environment of the battery cell 20 through the fixing seat to connect to the busbar. The fixing seat is used to press against the terminal body 241 to make the terminal body 241 relatively fixed to the fixing member. The connecting seat is connected to the fixing seat and is used to connect to the wall portion to fix the fixing member on the wall portion, and the connection method between the connecting seat and the wall portion includes, but is not limited to, welding, bonding, and riveting. The second insulating member 27 is disposed between the fixing member and the terminal body 241 to insulate and separate the fixing member and the terminal body 241, reducing the risk of short circuit. The second insulating member 27 may be a ring-like structure, and the second insulating member 27 is annularly arranged on the terminal body 241. The second insulating member 27 may cover at least part of the fixing seat to connect the second insulating member 27 and the fixing seat together. The material of the second insulating member 27 may be, but is not limited to, polyester, epoxy, polyurethane, polybutadiene acid, silicone, polyester imide, and polyimide.

The connecting portion 242 is the part of the electrode terminal 24 used to connect the tab 221 of the electrode assembly 22. The connecting portion 242 is connected to one end of the terminal body 241 close to the electrode assembly 22. In other words, the connecting portion 242 protrudes from one end of the terminal body 241 close to the electrode assembly 22 toward the direction close to the electrode assembly 22. In some embodiments, the wall portion is provided with a first through hole 2121, the first insulating member 23 is provided with a second through hole 231, the fixing member is annularly arranged on the first through hole 2121, the first through hole 2121 and the second through hole 231 are disposed opposite each other, and the connecting portion 242 passes through the first through hole 2121 and the second through hole 231 to connect to the tab 221 of the electrode assembly 22. The connecting portion 242 and the terminal body 241 may be an integrally formed member, or the connecting portion 242 and the terminal body 241 may be separately formed and then connected to each other. The shape of the connecting portion 242 may be, but is not limited to, circular ring body shape, cylindrical shape, square column shape, prismatic shape, and cross shape.

By adopting the above technical solution, it is convenient to connect the electrode terminal 24 and the tab 221.

In some embodiments of the present application, referring to FIGs. 7 and 8, an outer peripheral contour of the connecting portion 242 is a circular structure, and the tab 221 is connected to the connecting portion 242 along a circumferential direction of the connecting portion 242.

The outer peripheral contour of the connecting portion 242 being a circular structure means that the projection shape of the connecting portion 242 along the thickness direction of the wall portion is circular. In some embodiments, the terminal body 241 is a rotationally symmetric structure or a non-rotationally symmetric structure, the central axis of the connecting portion 242 is parallel to the central axis of the terminal body 241, and the central axis of the connecting portion 242 and the central axis of the terminal body 241 may coincide or deviate from each other.

The tab 221 being connected to the connecting portion 242 along the circumferential direction of the connecting portion 242 means that the tab 221 is connected to the connecting portion 242 along the peripheral edge of the connecting portion 242, so that the connection trajectory between the tab 221 and the connecting portion 242 is substantially a circular structure.

In some embodiments, the connecting portion 242 and the tab 221 of the electrode assembly 22 are welded along the circumferential direction of the connecting portion 242 to form a weld mark 28, and the shape of the weld mark 28 is substantially a circular ring structure.

By adopting the above technical solution, the connection area between the tab 221 and the connecting portion 242 can be increased, thereby effectively improving the connection strength between the tab 221 and the connecting portion 242, and the stress at the connection between the tab 221 and the connecting portion 242 in the circumferential direction of the connecting portion 242 can be more uniform, thereby effectively reducing the risk of fracture at the connection between the tab 221 and the connecting portion 242.

In some embodiments of the present application, referring to FIG. 8, the connecting portion 242 is a circular ring structure.

In other words, the central part of the connecting portion 242 is a hollow structure, the outer peripheral contour of the connecting portion 242 is circular, and the inner peripheral contour of the connecting portion 242 may be, but is not limited to, circular, square, and triangular.

By adopting the above technical solution, the connection strength between the tab 221 and the connecting portion 242 can be improved, and the weight of the electrode terminal 24 can be reduced, thereby further increasing the energy density of the battery cell 20.

In some embodiments of the present application, referring to FIG. 7, the first insulating member 23 includes an insulating body 232 disposed between the wall portion and the electrode assembly 22, and one side of the connecting portion 242 facing away from the terminal body 241 is flush with one side of the insulating body 232 facing away from the wall portion.

In some other embodiments of the present application, the first insulating member 23 includes an insulating body 232 disposed between the wall portion and the electrode assembly 22, and one side of the connecting portion 242 facing away from the terminal body 241 protrudes from one side of the insulating body 232 facing away from the wall portion.

The insulating body 232 is the main body part of the first insulating member 23, the insulating body 232 is disposed between the wall portion and the electrode assembly 22 to insulate and separate the wall portion from the electrode assembly 22, and the above second through hole 231 is provided on the insulating body 232. In some embodiments, the insulating body 232 is a plate-like structure, and the insulating body 232 covers one side of the wall portion facing the electrode assembly 22. In some embodiments, the first insulating member 23 also includes a protective portion 233, the protective portion 233 is disposed on the peripheral side of the insulating body 232 and protrudes toward the direction close to the electrode assembly 22, and the protective portion 233 is disposed between the inner wall of the housing 21 and the outer wall of the electrode assembly 22 to separate the inner wall of the housing 21 from the outer wall of the electrode assembly 22. In some embodiments, the protective portion 233 may extend along the peripheral edge of the insulating body 232 and be annularly arranged on the outer peripheral side of the electrode assembly 22.

A plane perpendicular to the thickness direction of the wall portion is defined as a reference plane. One side of the connecting portion 242 facing away from the terminal body 241 and one side of the insulating body 232 facing away from the wall portion may be on the reference plane, or one side of the insulating body 232 facing away from the wall portion is on the reference plane, and one side of the connecting portion 242 facing away from the terminal body 241 protrudes relative to the reference plane toward the direction close to the electrode assembly 22.

By adopting the above technical solution, there is no need to squeeze the tab 221 in order to pass the tab 221 through the first insulating member 23, making it more convenient to directly connect the electrode terminal 24 and the tab 221, while effectively reducing the risk of fracture of the tab 221.

In some embodiments of the present application, referring to FIG. 7, the minimum distance L1 between the outer wall of the connecting portion 242 and the hole wall of the first through hole 2121 is 0.1 mm to 7 mm.

The minimum distance L1 between the outer wall of the connecting portion 242 and the hole wall of the first through hole 2121 refers to the distance between the part of the outer wall of the connecting portion 242 closest to the hole wall of the first through hole 2121 and the hole wall of the first through hole 2121. The minimum distance L1 between the outer wall of the connecting portion 242 and the hole wall of the first through hole 2121 may be determined according to actual application needs, and may specifically be 0.1 mm, 0.5 mm, 1 mm, 2 mm, 3 mm, 4 mm, 5 mm, 6 mm, or 7 mm.

In some embodiments of the present application, referring to FIG. 7, the minimum distance L2 between the outer wall of the connecting portion 242 and the hole wall of the second through hole 231 is 0.1 mm to 7 mm.

The minimum distance L2 between the outer wall of the connecting portion 242 and the hole wall of the second through hole 231 refers to the distance between the part of the outer wall of the connecting portion 242 closest to the hole wall of the second through hole 231 and the hole wall of the second through hole 231. The minimum distance L2 between the outer wall of the connecting portion 242 and the hole wall of the second through hole 231 may be determined according to actual application needs, and may specifically be 0.1 mm, 0.5 mm, 1 mm, 2 mm, 3 mm, 4 mm, 5 mm, 6 mm, or 7 mm.

In some embodiments of the present application, referring to FIG. 7, the battery cell 20 further includes a sealing member 25, the sealing member 25 is disposed between the wall portion and the electrode terminal 24 and sleeves the connecting portion 242, and a minimum distance L3 between an outer wall of the connecting portion 242 and an inner wall of the sealing member 25 is 0.1 mm to 7 mm.

The sealing member 25 refers to a component that can play a sealing role, the sealing member 25 is at least partially clamped between the electrode terminal 24 and the wall portion of the housing 21, and the sealing member 25 can deform under the clamping force jointly generated by the electrode terminal 24 and the wall portion of the housing 21, thereby achieving gap sealing between the electrode terminal 24 and the wall portion of the housing 21. The sealing member 25 may be a ring-like structure, and the sealing member 25 is annularly arranged around the electrode terminal 24. The sealing member 25 may be, but is not limited to, a sealing ring and a sealing gasket. The sealing member 25 may be partially clamped between the electrode terminal 24 and the wall portion of the housing 21, or the entire sealing member 25 may be clamped between the electrode terminal 24 and the wall portion of the housing 21.

The minimum distance L3 between the outer wall of the connecting portion 242 and the inner wall of the sealing member 25 refers to the distance between the part of the outer wall of the connecting portion 242 closest to the inner wall of the sealing member 25 and the inner wall of the sealing member 25. The minimum distance L3 between the outer wall of the connecting portion 242 and the inner wall of the sealing member 25 may be determined according to actual application needs, and may specifically be 0.1 mm, 0.5 mm, 1 mm, 2 mm, 3 mm, 4 mm, 5 mm, 6 mm, or 7 mm.

In some embodiments of the present application, referring to FIG. 7, the minimum distance L1 between the outer wall of the connecting portion 242 and the hole wall of the first through hole 2121 is 0.1 mm to 7 mm, the minimum distance L2 between the outer wall of the connecting portion 242 and the hole wall of the second through hole 231 is 0.1 mm to 7 mm, and the minimum distance L3 between the outer wall of the connecting portion 242 and the inner wall of the sealing member 25 is 0.1 mm to 7 mm.

In the related art, when the minimum distance between the outer wall of the connecting portion 242 and the wall portion and/or the first insulating member 23 and/or the sealing member 25 is too small, the connecting portion 242 is prone to interfere with the wall portion and/or the first insulating member 23 and/or the sealing member 25. When the minimum distance between the outer wall of the connecting portion 242 and the wall portion and/or the first insulating member 23 and/or the sealing member 25 is too large, the projection area of the connecting portion 242 along the thickness direction of the wall portion decreases, reducing the connection area between the connecting portion 242 and the tab 221, and leading to easy fracture between the connecting portion 242 and the tab 221.

By adopting the above technical solution, the risk of interference between the connecting portion 242 and one or more of the wall portion, the first insulating member 23, and the sealing member 25 during the assembly process is effectively reduced, and the connecting portion 242 can have sufficient coverage area, thereby providing sufficient connection area between the connecting portion 242 and the tab 221, effectively improving the connection strength between the connecting portion 242 and the tab 221.

In some embodiments of the present application, referring to FIG. 7, the electrode terminal 24 and the tab 221 are welded to form a weld mark 28, and various parts of the weld mark 28 do not overlap with each other.

The weld mark 28 is formed after the welding of the connecting portion 242 and the tab 221 of the electrode assembly 22. At least part of the weld mark 28 is embedded in the connecting portion 242, at least part of the weld mark 28 is embedded in the tab 221, and at least part of the weld mark 28 is located between the connecting portion 242 and the tab 221 to connect the connecting portion 242 and the tab 221. The number of weld marks 28 may be one or multiple.

The various parts of the weld mark 28 not overlapping with each other means that: when the number of weld marks 28 is one, there is no intersection point in various parts of the weld mark 28, and when the number of weld marks 28 is multiple, the multiple weld marks 28 do not intersect each other, and there is no intersection point in various parts of each weld mark 28.

By adopting the above technical solution, the consistency of the welding depth between the electrode terminal 24 and the tab 221 is effectively improved, thereby effectively alleviating the situation of stress concentration at the connection between the electrode terminal 24 and the tab 221, and effectively improving the connection strength between the electrode terminal 24 and the tab 221.

In some embodiments of the present application, referring to FIGs. 7 and 8, the electrode terminal 24 includes a first metal layer 243 and a second metal layer 244 of different materials, and the first metal layer 243 is connected to one side of the second metal layer 244 facing the electrode assembly 22 and directly connects with the tab 221.

The material of the first metal layer 243 is different from the material of the second metal layer 244. The metal material used for the first metal layer 243 is mainly determined based on the material of the component connected to the first metal layer 243. Similarly, the metal material used for the second metal layer 244 is mainly determined based on the material of the component connected to the second metal layer 244. For example, if the material of the component connected to the first metal layer 243 is copper, the material of the first metal layer 243 is copper, and if the material of the component connected to the second metal layer 244 is aluminum, the material of the second metal layer 244 is aluminum. For another example, if the material of the component connected to the first metal layer 243 is copper, the material of the first metal layer 243 is copper, and if the material of the component connected to the second metal layer 244 is nickel, the material of the second metal layer 244 is nickel. In some embodiments, the first metal layer 243 and the second metal layer 244 are distributed along the thickness direction of the wall portion of the housing 21 (referring to the Z direction shown in FIG. 7). Specifically, the first metal layer 243 is located on one side of the second metal layer 244 facing the electrode assembly 22, the second metal layer 244 constitutes part of the terminal body 241, the first metal layer 243 constitutes another part of the terminal body 241 and the connecting portion 242, at least part of the first metal layer 243 is in the internal environment of the battery cell 20 to facilitate direct connection between the first metal layer 243 and the tab 221 of the electrode assembly 22, and at least part of the second metal layer 244 is exposed to the external environment of the battery cell 20 to facilitate connection between the second metal layer 244 and the corresponding component. For example, the second metal layer 244 is connected to the busbar.

By adopting the above technical solution, the electrode terminal 24 can be connected to two components of different materials, while effectively improving the connection strength between the electrode terminal 24 and the two components of different materials.

In some embodiments of the present application, referring to FIG. 7, the first metal layer 243 and the second metal layer 244 are connected to form a connection interface 245, and at least part of the connection interface 245 is a curved surface.

The connection interface 245 refers to the interface formed by the contacting parts between the first metal layer 243 and the second metal layer 244. At least part of the connection interface 245 is a curved surface. In other words, the connection interface 245 may be entirely composed of a curved surface, or the connection interface 245 may be composed of a curved surface and a flat surface together. For example, the central part of the connection interface 245 is a curved surface, and the outer peripheral part of the connection interface 245 is a flat surface, or the connection interface 245 may be composed of a curved surface and an inclined surface together. For example, the central part of the connection interface 245 is a curved surface, and the outer peripheral part of the connection interface 245 is an inclined surface. Optionally, the curved surface may be a regular curved surface, such as a spherical surface or a parabolic surface, or the curved surface may be an irregular curved surface.

In some embodiments, the first metal layer 243 and the second metal layer 244 are integrally connected by stamping. Specifically, during the stamping process, in order to form at least part of the connection interface 245 as a curved surface, the surface of the first metal layer 243 facing away from the second metal layer 244 in the thickness direction of the wall portion may be stamped to form an uneven surface such as a stepped surface or an arc surface, and the surface of the second metal layer 244 facing away from the first metal layer 243 in the thickness direction of the wall portion may be stamped to form a flat surface. Or the surface of the second metal layer 244 facing away from the first metal layer 243 in the thickness direction of the wall portion may be stamped to form an uneven surface such as a stepped surface or an arc surface, and the surface of the first metal layer 243 facing away from the second metal layer 244 in the thickness direction of the wall portion may be stamped to form a flat surface. Or both the surface of the first metal layer 243 facing away from the second metal layer 244 in the thickness direction of the wall portion and the surface of the second metal layer 244 facing away from the first metal layer 243 in the thickness direction of the wall portion may be stamped to form uneven surfaces such as stepped surfaces or arc surfaces. In this way, in the stamping direction, any multiple parts of the first metal layer 243 or any multiple parts of the second metal layer 244 undergo different amplitudes of displacement under pressure, so that at least part of the connection interface 245 between the first metal layer 243 and the second metal layer 244 forms a curved surface.

In some other embodiments, a first surface structure may be processed on the first metal layer 243 and a second surface structure may be processed on the second metal layer 244 first, at least part of the first surface structure and at least part of the second surface structure are curved surfaces, and the first surface structure and the second surface structure may be concave-convex fitted. After the first surface structure and the second surface structure are fitted and connected, the connection interface 245 is formed, thereby connecting the first metal layer 243 and the second metal layer 244 into one. Optionally, the connection method between the first surface structure and the second surface structure may be, but is not limited to, friction welding and bonding.

By adopting the above technical solution, the connection area between the first metal layer 243 and the second metal layer 244 is effectively increased, thereby effectively improving the connection strength between the first metal layer 243 and the second metal layer 244, effectively reducing the risk of fracture of the electrode terminal 24, and facilitating the improvement of the performance of the battery cell 20.

In some embodiments of the present application, referring to FIG. 7, the connection interface 245 includes a first connection surface and a second connection surface, a central axis of the electrode terminal 24 passes through the first connection surface, the second connection surface is located on an outer peripheral side of the first connection surface, and the first connection surface is a curved surface.

The electrode terminal 24 may be a rotationally symmetric structure, for example, the electrode terminal 24 being a cylindrical structure, or the electrode terminal 24 may be a non-rotationally symmetric structure, for example, the electrode terminal 24 being a square column structure or a prismatic structure.

The first connection surface is the central part of the connection interface 245, the second connection surface is the outer peripheral part of the connection interface 245, the second connection surface may be a ring-like structure, and the second connection surface is annularly arranged on the first connection surface. The ring-like structure may be various. For example, if the projection of the first connection surface in the thickness direction of the wall portion is circular, the projection of the second connection surface in the thickness direction of the wall portion is a circular ring. For another example, if the projection of the first connection surface in the thickness direction of the wall portion is square, the projection of the second connection surface in the thickness direction of the wall portion is a square ring.

The first connection surface being the central part of the connection interface 245 and the second connection surface being the outer peripheral part of the connection interface 245 are determined based on the distances of the first connection surface and the second connection surface relative to the central axis of the electrode terminal 24. The first connection surface being the central part of the connection interface 245 means that the first connection surface is closer to the central axis of the electrode terminal 24 relative to the second connection surface without limiting that the center of the first connection surface is located on the central axis of the electrode terminal 24, with a certain distance between them.

In some embodiments, the first connection surface is a curved surface, and the second connection surface is a flat surface.

In some other embodiments, the first connection surface is a curved surface, and the second connection surface is an inclined surface.

In still other embodiments, both the first connection surface and the second connection surface are curved surfaces.

Optionally, the curved surface may be a regular curved surface, such as a spherical surface or a parabolic surface, or the curved surface may be an irregular curved surface.

By adopting the above technical solution, the central part of the connection interface 245 is a curved surface, providing sufficient connection area between the central part of the first metal layer 243 and the central part of the second metal layer 244, thus further improving the connection strength between the first metal layer 243 and the second metal layer 244, and further reducing the risk of fracture of the electrode terminal 24.

In some embodiments of the present application, referring to FIG. 7, a central axis of the first connection surface coincides with the central axis of the electrode terminal 24.

The first connection surface may be a rotationally symmetric structure, for example, the projection of the first connection surface in the thickness direction of the wall portion being a circular structure. Or the first connection surface may be a non-rotationally symmetric structure, for example, the projection of the first connection surface in the thickness direction of the wall portion being an elliptical structure or a square structure. The central axis of the first connection surface coinciding with the central axis of the electrode terminal 24 means that the central axis of the first connection surface and the central axis of the electrode terminal 24 are parallel to each other and on the same straight line.

By adopting the above technical solution, the stress at the connection between the first metal layer 243 and the second metal layer 244 in the circumferential direction of the electrode terminal 24 is more uniform, and the connection area between the central part of the first metal layer 243 and the central part of the second metal layer 244 can be further increased, thereby further improving the connection strength between the first metal layer 243 and the second metal layer 244, and further reducing the risk of fracture of the electrode terminal 24.

In some embodiments of the present application, the second connection surface is a curved surface.

Optionally, the curved surface may be a regular curved surface, such as a spherical surface or a parabolic surface, or the curved surface may be an irregular curved surface.

By adopting the above technical solution, the area of the connection interface 245 can be further increased, thereby further improving the connection strength between the first metal layer 243 and the second metal layer 244, and further reducing the risk of fracture of the electrode terminal 24.

In some embodiments of the present application, referring to FIG. 7, the central axis of the first connection surface, a central axis of the second connection surface, and the central axis of the electrode terminal 24 coincide.

The second connection surface may be a rotationally symmetric structure, for example, the projection of the second connection surface in the thickness direction of the wall portion being a circular structure. Or the second connection surface may be a non-rotationally symmetric structure, for example, the projection of the second connection surface in the thickness direction of the wall portion being an elliptical structure or a square structure. The central axis of the first connection surface, the central axis of the second connection surface, and the central axis of the electrode terminal 24 coinciding means that the central axis of the first connection surface, the central axis of the second connection surface, and the central axis of the electrode terminal 24 are parallel to each other and on the same straight line.

By adopting the above technical solution, the stress at the connection between the first metal layer 243 and the second metal layer 244 in the circumferential direction of the electrode terminal 24 is more uniform, thereby further improving the connection strength between the first metal layer 243 and the second metal layer 244, and further reducing the risk of fracture of the electrode terminal 24.

In some embodiments of the present application, referring to FIG. 7, the point I of the connection interface 245 closest to the electrode assembly 22 is located on the central axis of the electrode terminal 24.

The point I of the connection interface 245 closest to the electrode assembly 22 refers to the point in the connection interface 245 with the smallest distance from the electrode assembly 22, and this point is located on the central axis of the electrode terminal 24.

By adopting the above technical solution, the part of the connection interface 245 with a larger area is concentrated on the central axis of the electrode terminal 24 to increase the connection force at the part of the connection between the first metal layer 243 and the second metal layer 244 on the central axis of the electrode terminal 24, thereby further improving the connection strength between the first metal layer 243 and the second metal layer 244, and further reducing the risk of fracture of the electrode terminal 24.

In a second aspect, referring to FIG. 2, an embodiment of the present application provides a battery 100, including the battery cell 20 described in any of the above embodiments.

The battery 100 provided by the embodiments of the present application effectively increases the energy density of the battery 100 due to the use of the battery cell 20 described in any of the above embodiments.

In a third aspect, referring to FIG. 1, an embodiment of the present application provides an electric device, including the above battery 100.

The electric device provided by the embodiments of the present application effectively improves the endurance performance of the electric device due to the use of the above battery 100.

The above are only preferred embodiments of the present application and are not used to limit the present application. Any modifications, equivalent replacements, and improvements made within the spirit and principles of the present application should be included in the protection scope of the present application.

## Claims

1. A battery cell, **characterized in that** the battery cell comprises:
an electrode assembly comprising a tab;
a housing configured to accommodate the electrode assembly, wherein the housing comprises a wall portion;
a first insulating member disposed between the wall portion and the electrode assembly; and
an electrode terminal disposed on the wall portion, wherein the electrode terminal passes through the first insulating member and directly connects with the tab.

2. The battery cell according to claim 1, **characterized in that** the electrode terminal comprises a terminal body and a connecting portion connected to one end of the terminal body close to the electrode assembly, the terminal body is disposed on the wall portion, and the connecting portion passes through the first insulating member and directly connects with the tab.

3. The battery cell according to claim 2, **characterized in that** an outer peripheral contour of the connecting portion is a circular structure, and the tab is connected to the connecting portion along a circumferential direction of the connecting portion.

4. The battery cell according to claim 3, **characterized in that** the connecting portion is a circular ring structure.

5. The battery cell according to any one of claims 2 to 4, **characterized in that**
the first insulating member comprises an insulating body disposed between the wall portion and the electrode assembly; and
one side of the connecting portion facing away from the terminal body is flush with one side of the insulating body facing away from the wall portion, or
one side of the connecting portion facing away from the terminal body protrudes from one side of the insulating body facing away from the wall portion.

6. The battery cell according to any one of claims 2 to 5, **characterized in that** the battery cell further comprises a sealing member, the sealing member is disposed between the wall portion and the electrode terminal and sleeves the connecting portion, the wall portion is provided with a first through hole, the first insulating member is provided with a second through hole, the connecting portion passes through the first through hole and the second through hole, and a minimum distance between an outer wall of the connecting portion and a hole wall of the first through hole and/or a hole wall of the second through hole and/or an inner wall of the sealing member is 0.1 mm-7 mm.

7. The battery cell according to any one of claims 1 to 6, **characterized in that** the electrode terminal and the tab are welded to form a weld mark, and various parts of the weld mark do not overlap with each other.

8. The battery cell according to any one of claims 1 to 7, **characterized in that** the electrode terminal comprises a first metal layer and a second metal layer of different materials, and the first metal layer is connected to one side of the second metal layer facing the electrode assembly and directly connects with the tab.

9. The battery cell according to claim 8, **characterized in that** the first metal layer and the second metal layer are connected to form a connection interface, and at least part of the connection interface is a curved surface.

10. The battery cell according to claim 9, **characterized in that** the connection interface comprises a first connection surface and a second connection surface, a central axis of the electrode terminal passes through the first connection surface, the second connection surface is located on an outer peripheral side of the first connection surface, and the first connection surface is a curved surface.

11. The battery cell according to claim 10, **characterized in that** a central axis of the first connection surface coincides with the central axis of the electrode terminal.

12. The battery cell according to claim 10 or 11, **characterized in that** the second connection surface is a curved surface.

13. The battery cell according to claim 12, **characterized in that** the central axis of the first connection surface, a central axis of the second connection surface, and the central axis of the electrode terminal coincide.

14. The battery cell according to any one of claims 9 to 13, **characterized in that** a point of the connection interface closest to the electrode assembly is located on the central axis of the electrode terminal.

15. A battery, **characterized in that** the battery comprises the battery cell according to any one of claims 1 to 14.

16. An electric device, **characterized in that** the electric device comprises the battery according to claim 15.
